(19) Europäisches Patentamt
European Patent Office
Office européen des brevets

(11) EP 0 626 278 B1

(12) **EUROPEAN PATENT SPECIFICATION**

(45) Date of publication and mention of the grant of the patent:
**13.01.1999 Bulletin 1999/02**

(51) Int. Cl.$^6$: **C08F 36/04**, C08F 4/48

(21) Application number: **94107960.0**

(22) Date of filing: **24.05.1994**

(54) **Solubilized anionic polymerization initiators and products therefrom**
Solubilisierte anionische Polymerisationsinitiatoren und daraus hergestellte Produkte
Amorçeurs de polymérisation anionique solubilisés et produits en résultant

(84) Designated Contracting States:
**DE ES FR GB IT**

(30) Priority: **24.05.1993 US 65791**

(43) Date of publication of application:
**30.11.1994 Bulletin 1994/48**

(73) Proprietor:
**BRIDGESTONE CORPORATION**
**Tokyo 104-0031 (JP)**

(72) Inventors:
- **Lawson, David F.**
**Uniontown, Ohio 44685 (US)**
- **Stayer, Mark L, Jr.**
**Suffield, Ohio 44260 (US)**
- **Saffles, David**
**Massillon, Ohio 44646 (US)**

(74) Representative:
**Kraus, Walter, Dr.**
**Patentanwälte Kraus, Weisert & Partner**
**Thomas-Wimmer-Ring 15**
**80539 München (DE)**

(56) References cited:
**EP-A- 0 451 603**
**EP-A- 0 590 490**
**FR-A- 2 250 774**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 626 278 B1

## Description

### TECHNICAL FIELD

The subject invention relates to anionic polymerizations resulting in diene polymer and copolymer elastomers. More particularly, the present invention relates to polymerization employing a solubilized amine initiator. Specifically, the invention relates to a solubilized lithium amine initiator which is soluble in acyclic alkane solvents, and which will reproducibly polymerize monomers in a controllable and narrow molecular weight distribution range.

### BACKGROUND ART

When conducting polymerizations on a commercial basis, it is important to utilize process conditions and components which will allow the molecular weight of the end products to be narrowly and reproducibly defined. The characteristics of a given polymer and its usefulness are dependent, among other things, upon its molecular weight. Hence, it is desirable to be able to predict with some certainty the molecular weight of the end product of the polymerization. When the molecular weight is not narrowly definable, or is not reproducible on a systematic basis, the process is not commercially viable.

In the art, it is desirable to produce elastomeric compounds exhibiting reduced hysteresis characteristics. Such elastomers, when compounded to form articles such as tires, and power belts, will show an increase in rebound, a decrease in rolling resistance and will have less heat build-up when mechanical stresses are applied.

A major source of hysteretic power loss has been established to be due to the section of the polymer chain from the last cross link of the vulcanizate to the end of the polymer chain. This free end cannot be involved in an efficient elastically recoverable process, and as a result, any energy transmitted to this section of the cured sample is lost as heat. It is known in the art that this type of mechanism can be reduced by preparing higher molecular weight polymers which will have fewer end groups. However, this procedure is not useful because processability of the rubber with compounding ingredients and during shaping operations decreases rapidly with increasing molecular weight.

It is difficult to obtain consistent properties, such as a reduction in hysteresis properties, if the polymer cannot be controllably reproduced in a narrow molecular weight range distribution. See, for example, U.S. Pat. No. 4,935,471, in which some polymers are prepared with a heterogeneous mixture of certain secondary amines, including lithium pyrrolidide. Polymers made in this manner have widely variable molecular weights, broad polydispersities, and their functional terminations tend to reproduce erratically, giving rise to poorly reproducible hysteresis reduction results.

EP-A-0 590 490 which is a document within the meaning of Article 54(3) EPC relates to anionic polymerization initiators which are soluble in acyclic alkane solvents. The initiators include a solubilized lithio amine having the general formula (A)Li(SOL)$_y$. SOL is a solubilizing component and A is an alkyl, dialkyl or cycloalkyl amine radical or a cyclic amine and y is from about 1 to 4. The invention is also directed towards polymers and other products made using the initiator, and methods therefor. Further, the invention contemplates a polymer, a polymer composition and products therefrom, which include a functional group from the reaction product of an amine and an organolithium compound. The resulting polymers may be terminated with a terminating, coupling or linking agent, which may provide the polymer with a multifunctionality.

FR-A-2 250 774 discloses anionic polymerization initiators having the following general formula:

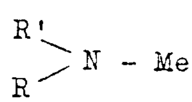

wherein R and R', which may be the same or different, represent $C_3$-$C_{20}$ alkyl, $C_5$-$C_7$ cycloalkyl or $C_6$-$C_{10}$ aryl and wherein Me represents lithium, sodium or potassium.

A major drawback with many of these known initiators, is that they are not soluble in acyclic alkanes, such as hexane. Polar solvents have heretofore been employed including the polar organic ethers such as dimethyl or diethyl ether, tetrahydrofuran, tetramethylethylenediamine, or diethylene glycol methyl ether (diglyme).

The present invention provides novel initiators for anionic polymerization, which are soluble in acyclic alkanes. The invention provides for the incorporation of a functionality from the initiator to be incorporated at the head and tail of the polymer chain. The invention provides for efficient, controllable and reproducible polymerizations, with the preparation of well defined end-products of a relatively narrow molecular weight range distribution.

## DISCLOSURE OF THE INVENTION

It is therefore, an object of the present invention to provide an anionic polymerization initiator which is soluble in acyclic alkanes.

It is a further object of the present invention to provide a method of preparing such an anionic polymerization initiator.

It is still a further object of the invention to provide an initiator which will reproducibly result in a polymer within a narrow, predictable molecular weight range.

It is another object of the present invention to provide elastomers formed with such a polymerization initiator.

It is also an object of certain embodiments of the present invention to provide diene polymers and copolymers having reduced hysteresis characteristics.

It is a further object of the present invention to provide vulcanizable elastomeric compounds of diene polymers and copolymers having reduced hysteresis characteristics.

Still another object of the present invention is to provide an improved tire formed from an elastomer as described hereinabove.

At least one or more of these objects together with the advantages thereof over the existing art, which shall become apparent from the specification which follows, are accomplished by the invention as hereinafter described and claimed.

In general, according to the present invention there is provided an anionic polymerization initiator which is soluble in acyclic alkane solvents, comprising: a solubilized lithio amine having the general formula

$$(A)Li(SOL)_y$$

where y is from 1 to 3; SOL is a solubilizing component selected from the group consisting of hydrocarbons, ethers, amines or mixtures thereof; and, A is selected from cyclic amines having the general formula

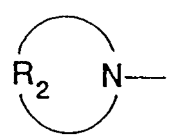

where $R_2$ is selected from the group consisting of an alkylene, oxy- or amino-alkylene group having from 3 to 16 methylene groups, with the proviso that an alkylene, oxy- or amino-alkylene group having from 3 to 7 methylene groups is excluded.

There is also provided a method of preparing an anionic polymerization initiator, which method comprises the steps of reacting an organolithium compound with a functionalizing agent in the presence of a solubilizing agent; the functionalizing agent being selected from the group consisting of cyclic amines having the general formula

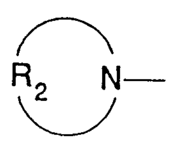

where $R_2$ is selected from the group consisting of an alkylene, oxy- or amino-alkylene group having from 3 to 16 methylene groups, with the proviso that an alkylene, oxy- or amino-alkylene group having from 3 to 7 methylene groups is excluded.

A method of preparing an anionic polymerization initiator comprises the steps of reacting an organolithium compound with a functionalizing agent to form a reaction product. The functionalizing agent is selected from the group consisting of cyclic amines having the general formula

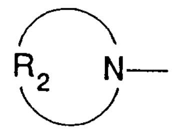

as defined hereinbefore.

The method also comprises the step of reacting the reaction product with a solubilizing agent selected from the group consisting of hydrocarbons, ethers, amines or mixtures thereof.

A functionalized polymer comprises a polymer chain carrying at least one functional group A wherein A is derived from a polymerization initiator having the general formula

$$(A)Li(SOL)_y$$

as defined hereinbefore.

A method of forming a functionalized polymer, according to the invention, comprises the steps of forming a solution of one or more anionically polymerizable monomers in an alkane solvent; and, polymerizing the monomers in the presence of an initiator which is soluble in the alkane solvent. The initiator comprises a solubilized lithio amine having the general formula

$$(A)Li(SOL)_y$$

as defined hereinbefore.

A vulcanizable elastomeric compound having reduced hysteresis properties comprises an elastomeric polymer having chains carrying at least one functional group A, wherein A is derived from a polymerization initiator having the general formula $(A)Li(SOL)_y$ as defined hereinbefore and from 5 to 80 parts by weight of carbon black, per 100 parts of the polymer.

The present invention also provides a tire having decreased rolling resistance resulting from a treadstock containing a vulcanizable elastomeric composition which comprises an elastomeric polymer having chains carrying at least one functional group A wherein A is derived from a polymerization initiator having the general formula

$$(A)Li(SOL)_y$$

as defined hereinbefore and from 5 to 80 parts by weight of carbon black, per 100 parts by weight of said polymer.

A vulcanizable rubber composition comprises a polymer carrying at least one amine functional group A as defined hereinbefore, wherein A is derived from the reaction product of an organolithium compound and an amine; and a tin-carbon bond.

A multifunctional polymer comprises at least one functional group A as defined hereinbefore, wherein A is derived from the reaction product of an organolithium compound and an amine; and, a tin-carbon bond.

A vulcanizable rubber composition comprises a polymer carrying at least one amine functional group A as defined hereinbefore, wherein A is derived from the reaction product of an organolithium compound and an amine; and a second functional group selected and derived from the group consisting of terminating agents, coupling agents and linking agents.

A tire having at least one vulcanizable elastomeric component comprises a multifunctional polymer having at least one functional group A as defined hereinbefore, wherein A is derived from a polymerization initiator which is the reaction product of an organolithium compound and an amine, wherein the multifunctional polymer has a tin-carbon bond, and from 5 to 80 parts by weight of carbon black, per 100 parts of the polymer.

A multifunctional polymer comprises at least one functional group A as defined hereinbefore, wherein A is derived from the reaction product of an organolithium compound and an amine; and a second functional group selected and derived from the group consisting of terminating agents, coupling agents and linking agents.

A tire having at least one vulcanizable elastomeric component is also provided, which component comprises a multifunctional polymer having at least one functional group A as defined hereinbefore, wherein A is derived from a polymerization initiator which is the reaction product of an organolithium compound and an amine; the polymer having a second functional group selected and derived from the group consisting of terminating agents, coupling agents and linking agents; and from 5 to 80 parts by weight of carbon black, per 100 parts of said polymer.

## PREFERRED EMBODIMENT FOR CARRYING OUT THE INVENTION

As will become apparent from the description which follows, the present invention provides novel polymerization initiators which are soluble in acyclic alkanes, including normal alkanes such as hexane, pentane, heptane, isoheptane, octane, their alkylated derivatives, mixtures thereof, and the like. It has also been discovered herein that certain rubber compositions, vulcanizable elastomeric compositions and articles thereof based upon polymers formed using such initiators, exhibit useful properties, such as for example, reproducible relatively narrow molecular weight ranges. Furthermore, the polymers according to the invention also contain a functionality from the initiator, which functionality is useful for example, in reducing hysteresis properties.

While the initiators of the present invention are soluble in acyclic alkane solvents, it will be appreciated that the use of the initiators in other solvents is also within the scope of the invention.

The preferred initiator according to the invention, is the reaction product of an amine, an organo lithium and a solubilizing component. The organo lithium and the amine may be reacted in the presence of the solubilizing component or agent, or they may be reacted first and the reaction product thereof subsequently treated with the solubilizing component. The preferred initiator is therefore, a solubilized lithio amine having the general formula

$$(A)Li(SOL)_y$$

where y is from 1 to 3. The parentheses of this general formula connote that the formula may include A-Li-$SOL_y$; $SOL_y$-A-Li; or, A-$SOL_y$-Li.

(SOL) is a solubilizing component and may be a hydrocarbon, ether, amine or a mixture thereof. It has been discovered that by the presence of the (SOL) component, the initiator is soluble in acyclic alkanes.

Exemplary (SOL) groups include dienyl or vinyl aromatic polymers or copolymers having from 3 to 300 polymerization units. Such polymers include polybutadiene, polystyrene, polyisoprene and copolymers thereof. Other examples of (SOL) include polar ligands, such as tetrahydrofuran (THF) and tetramethylethylenediamine (TMEDA).

The (A) component represents the amine functionality, at least one of which is carried by the resulting polymer, such as by being incorporated at the initiation site or head thereof. (A) is a cyclic amine having the general formula

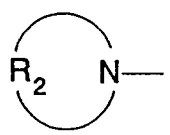

where $R_2$ is selected from the group consisting of an alkylene, oxy- or amino-alkylene group having from 3 to 16 methylene groups, with the proviso that an alkylene, oxy- or amino-alkylene group having from 3 to 7 methylene groups is excluded.

Exemplary $R_2$ groups include dodecamethylene and hexadecamethylene.

For example, (A) may be azacyclotridecane, also known as dodecamethyleneimine or cycloheptadecane, also known as hexadecamethyleneimine.

The initiator according to the present invention can be formed by preparing a solution of the amine component (A), in an anhydrous, aprotic solvent, such as hexane, preferably in the presence of the solubilizing agent or component (SOL), if (SOL) is an ether or an amino compound. To this solution is then added an organolithium catalyst in the same or a similar solvent. The organolithium compound has the general formula RLi where R is selected from the group consisting of alkyls, cycloalkyls, alkenyls, aryls and aralkyls having from 1 to 20 carbon atoms and short chain length low molecular weight polymers from diolefin and vinyl aryl monomers having up to about 25 units. Typical alkyls include n-butyl, s-butyl, methyl, ethyl and isopropyl. The cycloalkyls include cyclohexyl and methyl. The alkenyls include allyl and vinyl. The aryl and aralkyl groups include phenyl, benzyl and oligo(styryl). Exemplary short chain length polymers include the oligo(butadienyls), oligo(isoprenyls) and oligo(styryls).

If (SOL) is a short chain length polymer, the monomers to used to form (SOL) are added after the the amine and the organolithium are mixed, as will be addressed hereinbelow.

To the solution of the amine and the organolithium, is added a solution of the monomers of the solubilizing component (SOL) in the same or similar solvent, if (SOL) is a polydiene or a polyvinyl aromatic. The three components are allowed to react for up to about one hour at ambient temperature (25° to 30° C), or elevated temperatures up to about 100°C preferably at less than 50°C, and more preferably at less than 38°C, following which the catalyst is ready for use. The initiators according to the present invention are considered to be soluble if they remain in solution within an excess of an acyclic alkane solvent for about 3 or more days.

As stated above, the initiator thus formed may be employed as an initiator to prepare any anionically-polymerized elastomer, *e.g.*, polybutadiene, polyisoprene and the like, and copolymers thereof with monovinyl aromatics such as styrene, alpha methyl styrene and the like, or trienes such as myrcene. Thus, the elastomers include diene homopolymers and copolymers thereof with monovinyl aromatic polymers. Suitable monomers include conjugated dienes having from 4 to 12 carbon atoms and monovinyl aromatic monomers having 8 to 18 carbon atoms and trienes. Examples of conjugated diene monomers and the like useful in the present invention include 1,3-butadiene, isoprene, 1,3-pentadiene, 2,3-dimethyl-1,3-butadiene and 1,3-hexadiene, and aromatic vinyl monomers include styrene, a-methylstyrene, p-methylstyrene, vinyltoluene and vinylnaphthalene. The conjugated diene monomer and aromatic vinyl monomer are normally used at the weight ratios of 95-50:5-50, preferably 95-65:5-35.

Polymerization is conducted in an acyclic alkane solvent, such as the various hexanes, heptanes, octanes, mixtures thereof, and the like. In order to promote randomization in copolymerization and to control vinyl content, a polar coordinator may be added to the polymerization ingredients. Amounts range between 0 and 90 or more equivalents per equivalent of lithium. The amount depends on the amount of vinyl desired, the level of styrene employed and the temperature of the polymerization, as well as the nature of the specific polar coordinator (modifier) employed.

Compounds useful as polar coordinators are organic and include tetrahydrofuran (THF), linear and cyclic oligomeric oxolanyl alkanes such as 2-2'-di(tetrahydrofuryl) propane, di-piperidyl ethane, hexamethylphosphoramide, N-N'-dimethylpiperazine, diazabicyclooctane, dimethyl ether, diethyl ether and tributylamine. The linear and cyclic oligomeric oxolanyl alkane modifiers are described in U.S. Pat. No. 4,429,091.

Compounds useful as polar coordinators include those having an oxygen or nitrogen hetero-atom and a non-bonded pair of electrons. Other examples include dialkyl ethers of mono and oligo alkylene glycols; "crown" ethers; tertiary amines such as tetramethylethylene diamine (TMEDA) and linear THF oligomers.

A batch polymerization is usually begun by charging a blend of monomer(s) and an acyclic alkane solvent to a suitable reaction vessel, followed by the addition of the polar coordinator (if employed) and the initiator compound previously described. The reactants are heated to a temperature of from 20 to 200°C, and the polymerization is allowed to proceed for from 0.1 to 24 hours. A functional amine group is derived from the initiator compound and attaches at the initiation site. Thus, substantially every resulting polymer chain has the following general formula

AYLi

where A is as described above, and Y is a divalent polymer radical which is derived from any of the foregoing diene homopolymers, monovinyl aromatic polymers, diene/monovinyl aromatic random copolymers and block copolymers. The monomer addition at the lithium end causes the molecular weight of the polymer to increase as the polymerization continues.

To terminate the polymerization, and thus further control polymer molecular weight, a terminating agent, coupling agent or linking agent may be employed, all of these agents being collectively referred to herein as "terminating agents". Certain of these agents may provide the resulting polymer with a multifunctionality. That is, the polymers initiated according to the present invention, may carry at least one amine functional group A as discussed hereinabove, and may also carry a second functional group selected and derived from the group consisting of terminating agents, coupling agents and linking agents.

Useful terminating, coupling or linking agents include active hydrogen compounds such as water or alcohol; carbon dioxide; N,N,N',N'-tetradialkyldiaminobenzephenone (such as tetramethyldiaminobenzophenone); N,N-dialkylaminobenzaldehyde (such as dimethylaminobenzaldehyde); 1,3-dialkyl-2-imidazolidinones (such as 1,3-dimethyl-2-imidazolidinone); 1-alkyl substituted pyrrolidinones; 1-aryl substituted pyrrolidinones; dialkyl and dicycloalkyl-carbodiimides having from 5 to 20 carbon atoms; $(R_3)_aZX_b$;

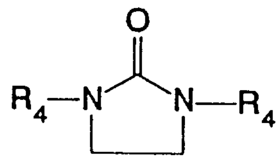

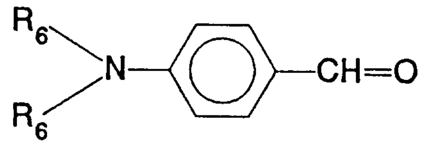

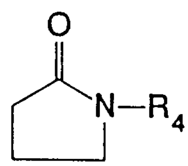

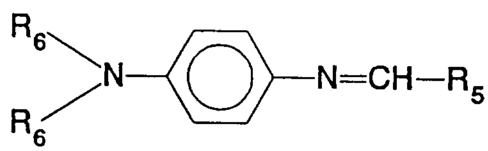

and,

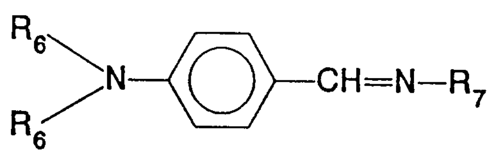

where

Z is tin or silicon. It is preferred that Z is tin.

$R_3$ is an alkyl having from 1 to 20 carbon atoms; a cycloalkyl having from 3 to 20 carbon atoms; an aryl having from 6 to 20 carbon atoms; or, an aralkyl having from 7 to 20 carbon atoms. For example, $R_3$ may include methyl, ethyl, n-butyl, neophyl, phenyl or cyclohexyl.

X is chlorine or bromine, "a" is from 0 to 3, and "b" is from about 1 to 4, where a + b = 4.

Each $R_4$ is the same or different and is an alkyl, cycloalkyl or aryl, having from 1 to 12 carbon atoms. For example, $R_4$ may include methyl, ethyl, nonyl, t-butyl or phenyl.

$R_5$ is an alkyl, phenyl, alkylphenyl or N,N-dialkylaminophenyl, having from 1 to 20 carbon atoms. For example, $R_5$ may include t-butyl, 2-methyl-4-pentene-2-yl, phenyl, p-tolyl, p-butylphenyl, p-dodecylphenyl, p-diethylaminophenyl, and p-(pyrrolidino)phenyl.

Each $R_6$ is the same or different, and is an alkyl or cycloalkyl having from 1 to 12 carbon atoms. Two of the $R_6$ groups may together form a cyclic group. For example, $R_6$ may include methyl, ethyl, octyl, tetramethylene, pentamethylene or cyclohexyl.

$R_7$ may include alkyls, phenyls, alkylphenyls or N,N-dialkylaminophenyls, having from 1 to 20 carbon atoms. For example, $R_7$ may include methyl, butyl, phenyl, p-butylphenyl, p-nonylphenyl, p-dimethylaminophenyl, p-diethylaminophenyl or p-(piperidino)phenyl.

Other examples of useful terminating agents include tin tetrachloride, $(R_1)_3SnCl$, $(R_1)_2SnCl_2$, $R_1SnCl_3$, carbodiimides, N-methylpyrrolidine, cyclic amides, cyclic ureas, isocyanates, Schiff bases and 4,4'-bis(diethylamino)benzophenone, where $R_1$ is as described hereinabove.

One preferred polymer according to the present invention, is a polymer which includes at least one functional group A as discussed hereinabove, wherein A is derived from the reaction product of an amine and an organolithium compound as also discussed hereinabove. Furthermore, a preferred polymer is multifunctional wherein the polymer also carries a tin-carbon bond, such as may be derived from the terminating, coupling or linking agent. A rubber composition or a vulcanizable rubber composition according to the present invention, may include such a polymer.

The terminating, coupling or linking agent is added to the reaction vessel, and the vessel is agitated for 1 to 1000 minutes. As a result, an elastomer is produced having an even greater affinity for compounding materials such as carbon black, and hence, even further reduced hysteresis. Additional examples of terminating agents include those found in U.S. Patent No. 4,616,069.

The polymer may be separated from the solvent by conventional techniques. These include steam or alcohol coagulation, thermal desolventization, or any other suitable method. Additionally, solvent may be removed from the resulting polymer by drum drying, extruder drying, vacuum drying or the like.

The elastomers of the present invention comprise a plurality of polymers, having a functional group at both the head and tail of the resulting polymer. Such compounding may result in products exhibiting reduced hysteresis, which means a product having increased rebound, decreased rolling resistance and has less heat build-up when subjected to mechanical stress.

It has also been found, as will be exemplified hereinbelow, that polymers formed using the initiators of the invention, are reproducibly formable in a relatively narrow range of molecular weights, such that substantially consistently reproducible polymers are possible with a molecular weight range of 20,000 to 250,000.

The polymers of the present invention can be used alone or in combination with other elastomers to prepare a product such as a tire treadstock, sidewall stock or other tire component stock compound. At least one such component is produced from a vulcanizable elastomeric or rubber composition. For example, the polymers according to the invention can be blended with any conventionally employed treadstock rubber which includes natural rubber, synthetic rubber and blends thereof. Such rubbers are well known to those skilled in the art and include synthetic polyisoprene rubber, styrene/butadiene rubber (SBR), polybutadiene, butyl rubber, Neoprene, ethylene/propylene rubber, ethylene/propylene/diene rubber (EPDM), acrylonitrile/butadiene rubber (NBR), silicone rubber, the fluoroelastomers, ethylene acrylic rubber, ethylene vinyl acetate copolymer (EVA), epichlorohydrin rubbers, chlorinated polyethylene rubbers, chlorosulfonated polyethylene rubbers, hydrogenated nitrile rubber and tetrafluoroethylene/propylene rubber. When the polymers of the present invention are blended with conventional rubbers, the amounts can vary widely such as between 10 and 99 percent by weight.

The polymers can be compounded with carbon black in amounts ranging from 5 to 100 parts by weight, per 100 parts of rubber (phr), with 5 to 80 parts being preferred and from 40 to 70 phr being more preferred. The carbon blacks may include any of the commonly available, commercially-produced carbon blacks but those having a surface area (EMSA) of at least 20 $m^2/g$ and more preferably at least 35 $m^2/g$ up to 200 $m^2/g$ or higher are preferred. Surface area values used in this application are those determined by ASTM test D-1765 using the cetyltrimethyl-ammonium bromide (CTAB) technique. Among the useful carbon blacks are furnace black, channel blacks and lamp blacks. More specifically, examples of the carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be utilized include acetylene blacks. Mixtures of two or more of the above blacks can be used in preparing the carbon black products of the invention. Typical values for surface areas of usable carbon blacks are summarized in the following TABLE I.

TABLE I

| CARBON BLACKS | |
|---|---|
| ASTM Designation (D-1765-82a) | Surface Area ($m^2/g$) (D-3765) |
| N-110 | 126 |
| N-220 | 111 |
| N-339 | 95 |
| N-330 | 83 |
| N-550 | 42 |
| N-660 | 35 |

The carbon blacks utilized in the preparation of the rubber compounds of the invention may be in pelletized form or an unpelletized flocculent mass. Preferably, for more uniform mixing, unpelletized carbon black is preferred. The reinforced rubber compounds can be cured in a conventional manner with known vulcanizing agents at 0.5 to 4 phr. For example, sulfur or peroxide-based curing systems may be employed. For a general disclosure of suitable vulcanizing agents one can refer to Kirk-Othmer, Encyclopedia of Chemical Technology, 3rd ed., Wiley Interscience, N.Y. 1982, Vol. 20, pp. 365-468, particularly "Vulcanization Agents and Auxiliary Materials" pp. 390-402. Vulcanizing agents may be used alone or in combination.

Vulcanizable elastomeric or rubber compositions of the invention can be prepared by compounding or mixing the polymers thereof with carbon black and other conventional rubber additives such as fillers, plasticizers, antioxidants and curing agents, using standard rubber mixing equipment and procedures and conventional amounts of such additives.

**General Experimental**

In order to demonstrate the preparation and properties of the initiators and elastomers according to the present invention, a number of such initiators and elastomers were prepared. A solution of styrene and butadiene monomers in hexane was prepared and Was polymerized with the above described initiators. To further show the effectiveness of the invention, a number of similar monomer solutions were polymerized with a heterogenous mixture of non-solubilized lithium pyrrolidide as an initiator to provide comparative control examples. The non-solubilized lithium pyrrolidides will be discussed first hereinbelow, followed by examples of initiators and elastomers made according to the present invention. As noted above, various techniques known in the art for carrying out polymerizations may be employed without departing from the scope of the present invention.

**I. Non-Solubilized Lithium Pyrrolidide Initiation**

The following examples are included for comparison to the initiators and elastomers prepared according to the invention, which will be exemplified hereinbelow.

**Experiment No. 1**

**Initiator Preparation**

In a small dried and nitrogen purged bottle, 20 ml of a 0.5 M solution of pyrrolidine in hexanes (10 milliequivalent or "meq") was treated with 6.36 ml of a 1.65 M solution of n-butyllithium in hexanes (10.5 meq). The bottle was fitted with a perforated crown seal having a rubber liner. The resulting heterogeneous mixture was agitated gently at room temperature for 16 hours, after which the product was drawn off for use as an initiator. The mixture was shaken vigorously before and while drawing off the samples.

**Polymerization**

The initiator mixture made in the above manner was transferred by syringe to each of two small bottles which were also fitted with a seal as above. The bottles each contained a 75/25 weight percent monomer blend of butadiene/styrene, at 25 weight percent in hexane and a level of 1.0 meq Li/100 grams of monomer. The bottles also contained 0.6 mol of N,N,N',N'-tetramethylethylenediamine (TMEDA) per mol of lithium. The mixtures were agitated at 50° C for 2.5 hours. The reaction resulted in approximately 100 percent conversion of monomer to polymer.

The first bottle of cement, EXAMPLE 1, was then quenched by injection of 1.5 milliliters (ml) of isopropyl alcohol (i-PrOH), and the second bottle of cement, EXAMPLE 2, was treated for an additional 90 minutes at 50° C with 1.15 mol of 4-(N,N-diethylamino) benzaldehyde per mol of lithium. The cement of EXAMPLE 2 gas then quenched with 1.5 ml of i-PrOH.

Both cements from EXAMPLE 1 and EXAMPLE 2 were treated with an antioxidant, namely, 2 ml of a mixture containing 2.0 weight percent of dibutyl paracresol (DBPC) and 0.7 weight percent of UOP-88, available from Universal Oil Products Co., in hexane. The cements were then coagulated in i-PrOH and drum dried. The resulting polymers were analyzed, and the characteristics thereof are reported in TABLE II hereinbelow.

TABLE II

| ANALYSIS OF POLYMERS FROM EXAMPLES 1 AND 2 | | |
|---|---|---|
| HNMR | Example I | Example 2 |
| | 24% styrene (0% block styrene) | 24.8% styrene (0% block styrene) |
| Percent of butadiene portion as 1,2 linkages | 51.9% | 49.4% |
| GPC (THF solvent) | | |
| Mn | 136365 | 136697 |
| Mw/Mn | 1.35 | 1.40 |
| $Tg^a$ | -36.5°C | -38.8°C |

a) glass transition temperature at onset

The polymers of EXAMPLES 1 and 2 were compounded using the rubber recipe reported in TABLE III hereinbelow.

TABLE III

| COMPOUNDING RECIPE | | | |
|---|---|---|---|
| Ingredient | Mix Order | Parts per Hundred Parts Rubber | |
| Polymer | 1 | 100 | Masterbatch 145-155°C, 60 RPM |
| Naphthenic oil | 2 | 10 | |
| Carbon black, N-351 | 3 | 55 | |
| ZnO | 4 | 3 | |
| Antioxidant | 5 | 1 | |
| Wax blend | 6 | 2 | |
| | Total Masterbatch: | 171 | |
| Stearic acid | | 2 | Final 77-93°C, 40 RPM |
| Sulfur | | 1.5 | |
| Accelerator | | 1 | |
| | Total Final: | 175.5 | |

The compounded polymers were then cured using 3.8 cm x 10.2 cm x 0.1 cm (1.5 inch x 4 inch x 0.040 inch)tensile plaques, for 45 minutes at 300°F (149°C); Dynastat buttons, 50 minutes at 300°F (149°C). The results of ensuing physical tests are reported in TABLE IV.

TABLE IV

| PHYSICAL TESTS OF COMPOUNDED POLYMERS OF EXAMPLES 1 AND 2 | | | | | | | |
|---|---|---|---|---|---|---|---|
| Example | ML/4/212 | | Wt% Bound | 1 Hz Dynastat tan δ | Ring Stress-Strain, MPa (psi), RT | | |
| No. | (gum) | (cpd) | Rubber | 50° C | M300 | T.S. | %Eb |
| 1 | 32 | 81 | 28 | 0.110 | 14.96 (2169) | 19.56 (2836) | 419 |
| 2 | 33 | 84 | ca.29 | 0.107 | 15.01 (2177) | 16.04 (2327) | 359 |

The test results reported in TABLE IV, show that the compounded polymer of EXAMPLE 1 has a tan δ value about 30 percent below the value expected for an unmodified polymer of this molecular weight, prepared using a typical alkyllithium initiator. However, the polymer of EXAMPLE 2 fails to show any significant reduction in tan δ beyond this, despite its having been additionally treated at the tail with a reagent which is known to be effective for reducing tan δ. The lack of additional effect was also noted in the bound rubber results, where the result for EXAMPLE 2 was not significantly different from that of EXAMPLE 1.

It was concluded that the polymer cement prepared in this manner, besides having somewhat broadened molecular weight distribution, also did not have sufficient live C-Li chain ends after polymerization to allow for significant reaction with a chain-end functionalizing reagent. Therefore, this method was not highly desirable for synthesis of polymers with optimum properties.

**Experiment No. 2**

**Initiator Preparation**

A second non-solubilized initiator was prepared. In a clean, stirred, one gallon stainless steel reactor, which had been dried and preconditioned, and then nitrogen purged, was placed 554 g (1.22 pounds) of anhydrous hexanes, and 5.4 ml of a 0.77 M solution of pyrrolidine in hexanes (4.16 meq). This was treated with 2.69 ml of a 1.58 M solution of n-butyllithium in hexanes (4.25 meq), stirring at room temperature overnight. The resulting heterogeneous mixture was used in situ for the subsequent polymerization.

**Polymerization**

The reactor containing the above initiator mixture was charged with 341 g (0.76 pounds) of a 34 weight percent blend of styrene and hexanes, 1.28 mmol of TMEDA, and 3189 g (3.06 pounds) of a 25.5 weight percent blend of 1,3-butadiene in hexanes. The reactor was heated to 46°C and controlled at that temperature for three hours.

A portion of the polymer cement made in this manner was transferred by needle into three small bottles scaled as in Experiment 1 hereinabove. The remainder of the cement was collected in a large glass container, under a nitrogen purge. The cement in the large container, EXAMPLE 3 was quenched by injection with 1.5 ml of isopropyl alcohol (i-PrOH), while the cement in the small bottles, EXAMPLE 4 was treated for an additional 2 hours at 50°C with 1.25 mol of 1,3-dimethylimidazolidin-2-one (1,3-DMI) per mol of lithium. The cement of EXAMPLE 4 was then quenched with 1.5 ml of i-PrOH, and both cement portions were treated with an antioxidant (2 ml of a mixture containing 2.0 wt. percent DBPC in hexane). The contents of the bottles were combined, and both EXAMPLES 3 and 4 were coagulated separately in i-PrOH and drum dried. Suitable characterizations were performed, and the results are summarized in TABLE V hereinbelow.

**Experiment No. 3**

Repeat experiments were run using the same reactor as in Experiment No. 2, employing the same amount of reagents, reaction times, and temperatures from those of EXAMPLES 3 and 4. The resulting cement was compounded in the recipe of TABLE III hereinabove, and is reported as EXAMPLE 5 hereinbelow. A portion of EXAMPLE 5 was end-linked by reaction with one equivalent of $SnCl_4$ per equivalent of lithium, to produce EXAMPLE 6. A cement was also prepared as for EXAMPLE 5, except that the initiator was allowed to form in the reactor for three (3) days instead of overnight. Also, the resulting polymer was compounded in the recipe of TABLE VI hereinabove, and is reported herein as EXAMPLE 7. A portion of EXAMPLE 7 was treated with 1.25 mole of 4-(N,N-dimethylamino)-benzylidene butylaniline per mole of lithium to produce EXAMPLE 8. The order of addition of polymerization reagents for the run producing EXAMPLE 7 and 8 were as follows: (1) TMEDA, (2) butadiene blend, (3) styrene blend. The polymeric products were worked up as described for EXAMPLES 3 and 4. Results of their characterization and compounded evaluation are given in TABLE V hereinbelow.

The product polymers were cured using 3.8 cm x 10.2 cm x 0.1 cm (1.5 inch x 4 inch x 0.040) tensile plaques, for 20 minutes at 165°C; and Dynastat buttons, for 25 minutes and 165°C. TABLE V hereinbelow lists the characterizations and compounded properties of Examples 5 to 8.

TABLE V

| SUMMARY OF CHARACTERIZATION AND COMPOUNDED PHYSICAL PROPERTIES OF EXAMPLES 3-8 | | | | | | | | |
|---|---|---|---|---|---|---|---|---|
| Example No. | | 5 | 6 | 3 | 4 | 7 | 8 | 3,4,7,8 Control[a] |
| NMR | % VINYL [b] | 52.9 | 52.9 | 70.0 | 70.0 | 63.6 | 63.6 | ca.40 |
| | % STY | 22.4 | 22.4 | 22.0 | 22.0 | 26.6 | 26.6 | ca.20 |
| DSC $T_g$, °C[c] | | -42 | -42 | -24 | -24 | -24 | -24 | ca.-40 |
| GPC (THF) | | | | | | | | |
| $M_n \times 10^{-3}$ | | 95.8 | 221 | 254 | 228 | 201 | 197 | ca.200 |
| $M_w/M_n$ | | 1.1 | 2.2 | 2.5 | 2.3 | 1.4 | 1.2 | ca.2-4 |
| Coupling | | -- | 78% | -- | -- | -- | -- | -- |
| ML/4/100°C | | | | | | | | |
| Raw | | 8 | 67 | 108 | 109 | 77 | 72 | ca.140 |
| Compound | | 34 | 71 | 94 | 101 | 72 | 75 | 74 |
| Test Recipe, | | | | | | | | |
| TABLE NO. | | III | III | VI | VI | VI | VI | VI |
| STRESS M300[d] | | 14.59 (2116) | 19.17 (2780) | 9.38 (1361) | 10.67 (1547) | 10.48 (1520) | 10.73 1556) | 8.80 (1276) |
| -STRAIN, TB[e] | | 21.48 (3115) | 18.81 (2728) | 13.36 (2373) | 18.39 (2667) | 18.27 (2649) | 18.14 (2631) | 24.49 (3551) |
| 23°C % EB[f] | | 455 | 344 | 503 | 497 | 507 | 491 | 653 |
| % BOUND RUBBER[g] | | 21 | 37 | 34 | 40 | 27 | 37 | 32 |
| DYNASTAT 1 HZ, | | | | | | | | |
| tan δ 50°C | | 0.144 | 0.078 | 0.156 | 0.138 | 0.162 | 0.143 | 0.186 |
| tan δ 23°C | | 0.167 | 0.109 | 0.180 | 0.219 | 0.231 | 0.219 | 0.227 |

a) Blend of unmodified SBR's run in comparison with EXAMPLES 3, 4, 7, 8 in formulation of TABLE VI
b) Mol% of butadiene content as 1,2-linkages
c) Onset of $T_g$
d) Average ring stress-strain, 300% modulus, MPa (psi)
e) Average ring stress-strain, tensile modulus, MPa (Psi)
f) Average percent elongation at break
g) Weight percentage of rubber content in C-black filled compound found insoluble in toluene after 2 days at room temperature, with no agitation

TABLE VI

| MEDIUM-OIL COMPOUNDING FORMULATION | | | |
|---|---|---|---|
| Ingredient | Mix Order | Parts per Hundred Parts Rubber | |
| Polymer | 1 | 100 | Masterbatch 60 RPM |
| Carbon black, 145-155°C, | 2 | 54 | |
| ZnO | 3 | 3 | |
| Stearic acid | 4 | 2 | |
| Antioxidant Procesing aids | 5 | 4.25 | |
| Aromatic oil | 6 | 27.6 | |
| | Total Masterbatch: | 190.85 | |
| Sulfur | | 2.25 | Final 77-93°C, 40 RPM |
| Accelerator blend | | 2.15 | |
| | Total Final: | 195.25 | |

The results in TABLE V show the shortcomings of polymerization with N-lithiopyrrolidide initiators. Although the initiator/monomers charged in runs 3,5 and 7 were the same (1.0 meq of lithium per 100 grams of monomer), the molecular weight of the products ranged from 96,000 to 254,000, which is evidence of the highly erratic initiator. The high molecular weight products are indicative of slow initiation relative to propagation, presumably due to the heterogenous nature of the system. EXAMPLE 5 exhibited a tan δ reduction at 50°C about 31% lower than that of an unmodified polymer of similar microstructure and molecular weight. The result of end-linking of the live cement of EXAMPLE 5, via $SnCl_4$, leading to EXAMPLE 6 was a further reduction in tan δ, to 40% of that of an unmodified polymer of the same base (uncoupled) molecular weight. The bound rubber content, which is indicative of the extent of interaction with carbon black, increased appreciably while the GPC showed that 78 percent of the polymer chains were end-linked, an indication that an appreciable fraction of "live" chain-ends were still available for linking.

EXAMPLES 3, 4 and 7, 8 resulted in polymers of such high molecular weight that they were not processable for formulation in the low oil recipe of TABLE III, but were formulated according to the recipe of TABLE VI, which contains 27 parts per 100 rubber of oil for better processing. The results of the evaluations in TABLE V indicate that these polymers show reduced tan δ, but the 13-16 percent reduction relative to the unmodified SBR elastomers is small compared to that demonstrated in the EXAMPLES 5 and 6. Little change in viscosity occurred upon attempting end-linking with $SnCl_4$, indicating that there was little active C-Li remaining at the chain ends after polymerization in these polymers. The $SnCl_4$-treated polymers (EXAMPLES 4 and 8) exhibited tan δ's which were about 75 percent of that of the unmodified samples.

In summary, the results of polymerizations which were initiated using N-lithiopyrrolidide as described hereinabove, were highly erratic, both with respect to the nature and composition of the product as well as to other characteristics thereof.

**II. Polymerization with a Solubilized Initiator**

**Experiment No. 4**

**PREPARATION OF POLYMER FROM $C_{12}H_{24}NLI \cdot 2THF$ INITIATOR**

**Preparation of $C_{12}H_{24}NLi \cdot 2THF$ initiator:**

Dodecamethyleneimine ("DDMI") was vacuum distilled from calcium hydride and transferred under nitrogen to a dried, nitrogen-purged bottle. The N-lithio salt of DDMI was prepared by treating 10 ml of a 0.4 M solution of DDMI in hexanes with 2 ml of a 4.0 M solution of THF in hexanes, followed by the slow addition of 2.35 ml of a 1.7M solution of n-butyllithium in hexanes, with gentle swirling. Swirling was continued at room temperature overnight. The resulting 0.28M solution was a clear, pale yellow. If the DDMI were treated by rapid addition of n-butyllithium, or in the absence

of at least about 2 equivalents of the THF, cloudiness and/or precipitation occurred right away. The $C_{12}H_{24}NLi \cdot 2THF$ solution was stable for at least several days at room temperature. Samples were drawn from it by syringe for use in initiating polymerization.

**Polymerization of Butadiene and Styrene with $C_{12}H_{24}NLi \cdot 2THF$ or n-BuLi:**

A 0.28 M solution of the above initiator was added to sealed botties containing an 80%/20% by weight blend of butadiene and styrene in hexanes, at a level of 1.0 meq Li/100 grams monomer, and N,N,N',N-tetramethylethylenediamine ("TMEDA") was added at 0.45 TMEDA/Li (mol/mol). The mixtures were agitated at 50°C for 2.5 hr, proceeding to approximately 90-100% conversion to polymer. In practice, there is considerable leeway in the reaction times and temperatures, much the same as there is leeway in the reaction vessels, type of agitation, etc., used. The treated cements then were quenched by injection with 1 ml of i-PrOH, treated with an antioxidant (3 ml of a mixture containing 1.6 wt% DBPC in hexane), coagulated in i-PrOH, air-dried at room temperature, then drum-dried. Suitable characterizations were performed. Characterizations are summarized in Table VII. Table VII also contains data for polymers prepared with n-butyllithium in the same way, in the absence of DDMI or THF. These were prepared as a comparison, to show the type of hysteresis behavior obtained in the absence of the initiator compositions of this invention. The relative hysteresis behavior is typical of that of nonfunctional polymers.

**Polymerization of Butadiene and Styrene, and End-linking with $SnCl_4$:**

The above procedure was followed exactly, except that after 1.5 hour of polymerization at 50°C, the polymerization mixture was treated with 0.8 equivalent of $SnCl_4$ per equivalent of Li charged. The products were worked up in the same manner as above, and the characterizations are also summarized in Table VII.

**EVALUATION OF COMPOUNDED PROPERTIES**

The product polymers were compounded and tested as indicated in the test recipe shown in Table I and cured 20 minutes at 165°C. Results of physical tests are summarized in Table VII.In addition, the carbon-bound rubber content of the uncured, final compounded stocks of Examples 1 and 2 were 33 percent and 49 percent, respectively. This indicates an enhanced interaction between the polymer and carbon black in these cases, compared to unmodified rubber, which typically exhibits less than 23 percent carbon-bound rubber, and butyllithium-initiated, Sn-coupled rubber, which typically exhibits less than 35 percent carbon-bound rubber. The results of this test provided good evidence for reduced hysteresis in this polymer. The Dynastat tanδ (50°C) = 0.091-0.094 is about 50 percent below the value expected for an unmodified polymer of this microstructure and molecular weight, such as would be prepared using a typical alkyllithium initiator.

TABLE VII

| CHARACTERIZATIONS OF POLYMERS FROM $C_{12}H_{24}NLI \cdot 2THF$ INITIATORS | | | | | | | | |
|---|---|---|---|---|---|---|---|---|
| **Example No.** | **Conditions** | **$T_g$, °C** | **%Sty** | **%1,2** | **ML/4** | **$M_n$** | **$M_w/M_n$** | **%Coupl** |
| 9 | $C_{12}H_{24}NLi \cdot 2THF$ 50°C | -31.4 | 20.9 | 56.2 | 26.2 | 127724 | 1.25 | (6% HMW) |
| 10 | $C_{12}H_{24}NLi \cdot 2THF$ 50°C - $SnCl_4$-coupled | -34.4 | 21.0 | 53.7 | 86.1 | 215628 | 1.71 | 74 |
| 11 | n-BuLi only, 50°C | -39.9 | 20.8 | 49.1 | 5.8 | 89631 | 1.17 | -- |
| 12 | n-BuLi only, 50°C $SnCl_4$-coupled | -38.2 | 20.6 | 50.2 | 65.9 | 217335 | 1.51 | 82 |

TABLE VIII

| COMPOUNDED EVALUATIONS OF POLYMERS PREPARED USING $C_{12}H_{24}NLI \cdot 2THF$ INITIATOR | | | | | | |
|---|---|---|---|---|---|---|
| **Example No.** | **Tensile Strength, MPa (psi)** | **% Elong. at break** | **ML/4-Cpd** | **Dispersion Index, %** | **% Bound Rubber** | **Dynastat, 1HZ, tan δ, 50°C** |
| 9 | 22.80 (3306) | 441 | 74 | 91 | 33.0 | 0.091 |
| 10 | 25.33 (3673) | 426 | 104 | 92 | 48.9 | 0.094 |
| 11 | 16.38 (2375) | 427 | 30 | 96 | 9.2 | 0.186 |
| 12 | 20.85 (3024) | 449 | 66 | 97 | 12.6 | 0.120 |

A preferred method of preparing the initiators according to the invention, will now be described. A vessel, such as a small bottle containing a Teflon or glass-clad magnetic stirring bar, is dried, sealed, and purged with nitrogen. The following is added by syringe while stirring:

1. 30 mmol anhydrous 2° amine in hydrocarbon solvent, and
2. 60 mmol anhydrous polar solubilizer in hydrocarbon solvent.
3. 30.1 mmol of alkyl lithium in hydrocarbon solvent is added by syringe at once, with stirring, while taking precaution for back-pressures (the larger ring amides may tend to precipitate if the alkyllithium is added too rapidly).

The solution will heat and develop pressure immediately, but will soon begin to cool back down. When larger amounts of reagent are prepared, *e.g.* 250-300 mmol in large bottles or 0.5-1.5 mol in reactors, best results are obtained when chilled or cold water cooling is used to keep the peak temperature at 38°C or below. The normal procedure has been to allow the mixture to stir overnight at room temperature before using. However, the reaction is essentially complete within minutes. The mixture should be clear, straw-yellow, without significant precipitation. Light-to-moderate haziness or cloudiness does not appear to affect activity. Anhydrous conditions are required. (SOL)/hydrocarbon solvent solutions with less than 30 ppm of water give best results. Initiator reagents can be stored under positive nitrogen pressures for periods of up to several weeks at room temperature (25-27°C).

It should now be clear from the foregoing examples and specification disclosure, that initiators according to the present invention are useful for the anionic polymerization of diene monomers. Reproducible polymerization of such polymers within a relatively narrow molecular weight range is achieved, and the resulting polymers also exhibit good preservation of live C-Li ends, when compared to the non-solubilized initiators heretofore known in the art.

It is to be understood that the invention is not limited to the specific initiator reactants, monomers, terminators, polar coordinators or solvents disclosed herein, except as otherwise stated in the specification.

## Claims

**1.** An anionic polymerization initiator soluble in acyclic alkane solvents, comprising: a solubilized lithio amine having the general formula

$$(A)Li(SOL)_y$$

where y is from 1 to 3; SOL is a solubilizing component selected from the group consisting of hydrocarbons, ethers, amines or mixtures thereof; and, A is selected from cyclic amines having the general formula

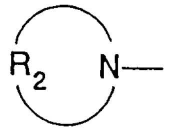

where $R_2$ is selected from the group consisting of an alkylene, oxy- or amino-alkylene group having from 3 to 16 methylene groups, with the proviso that an alkylene, oxy- or amino-alkylene group having from 3 to 7 methylene

groups is excluded.

2. An anionic polymerization initiator, as set forth in claim 1, wherein SOL is selected from the group consisting of dienyl or vinyl aromatic polymers or copolymers having from 3 to 300 polymerization units.

3. An anionic polymerization initiator, as set forth in claim 2, wherein SOL is selected from the group consisting of polybutadiene, polystyrene, polyisoprene and copolymers thereof.

4. An anionic polymerization initiator, as set forth in claim 1, wherein SOL is selected from the group consisting of tetrahydrofuran and tetramethylethylenediamine.

5. An anionic polymerization initiator, as set forth in claim 1, wherein A is selected from the group consisting of azacyclotridecane and azacycloheptadecane.

6. An anionic polymerization initiator, as set forth in claim 1, prepared by the step of reacting an organolithium compound with a functionalizing agent in the presence of said solubilizing agent; said functionalizing agent being selected from the group consisting of said alkyl, dialkyl and cycloalkyl amine radicals.

7. An anionic polymerization initiator, as set forth in claim 6, wherein said organolithium compound has the general formula RLi where R is selected from the group consisting of alkyls, cycloalkyls, alkenyls, alkynyls, aryls and aralkyls having from 1 to 20 carbon atoms and short chain length low molecular weight polymers from diolefin and vinyl aryl monomers having up to 25 units.

8. An anionic polymerization initiator, as set forth in claim 1, prepared by the steps of reacting an organolithium compound with a functionalizing agent to form a reaction product; said functionalizing agent being selected from the group consisting of said alkyl, dialkyl and cycloalkyl amine radicals; and, reacting said reaction product with said solubilizing agent.

9. A functionalized polymer comprising:

a polymer chain carrying at least one functional group A wherein A is derived from a polymerization initiator having the general formula

$$(A)Li(SOL)_y$$

where y is of from 1 to 3; SOL is a solubilizing component selected from the group consisting of hydrocarbons, ethers, amines or mixtures thereof; and, A is selected from cyclic amines having the general formula

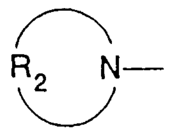

where $R_2$ is selected from the group consisting of an alkylene, oxy- or amino-alkylene group having from 3 to 16 methylene groups, with the proviso that an alkylene, oxy- or amino-alkylene group having from 3 to 7 methylene groups is excluded.

10. A functionalized polymer, as set forth in claim 9, prepared by the steps of forming a solution of one or more anionically polymerizable monomers in an alkane solvent; and, polymerizing said monomers in the presence of said polymerization initiator.

11. A functionalized polymer, as set forth in claim 10, wherein the preparation comprises the further step of reacting said polymer with a functional group selected and derived from the group consisting of terminating agents, coupling agents and linking agents, such that the resulting polymer is multifunctional.

12. A functionalized polymer, as set forth in claim 11, wherein said terminating agent, coupling and linking agents are

selected from the group consisting of carbon dioxide; N,N,N',N'-tetraalkyldiaminobenzophenones; N,N-dialkylaminobenzaldehydes; 1,3-dialkylimidazolidinones; 1-alkyl substituted pyrrolidinones; 1-aryl substituted pyrrolidinones; dialkyl- and dicycloalkylcarbodiimides having from 5 to 20 carbon atoms; $(R_3)_aZX_b$;

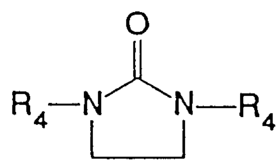

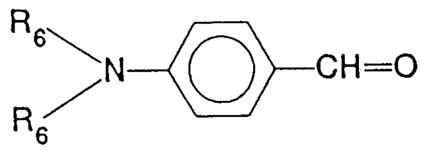

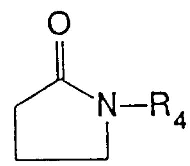

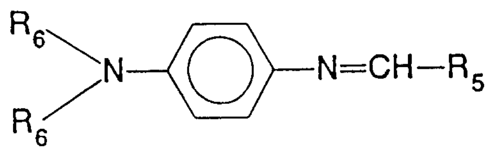

and,

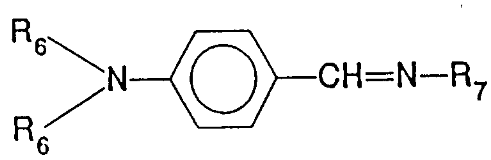

where Z is tin or silicon; $R_3$ is selected from the group consisting of alkyls having from 1 to 20 carbon atoms, cycloalkyls having from 3 to 20 carbon atoms, aryls having from 6 to 20 carbon atoms and aralkyls having from 7 to 20 carbon atoms; X is chlorine or bromine; a is from 0 to 3 and b is from 1 to 4 where a + b = 4; each $R_4$ is the same or different and is selected from the group consisting of alkyls, cycloalkyls and aryls, having from 1 to 12 carbon atoms; $R_5$ is selected from the group consisting of t-alkyls, phenyls, alkylphenyls and N,N-dialkylaminophenyls, having from 4 to 20 carbon atoms; each $R_6$ is the same or different, and is selected from the group consisting of alkyls and cycloalkyls having from 1 to 12 carbon atoms; and, $R_7$ is selected from the group consisting of alkyls, phenyls, alkylphenyls and N,N-dialkylaminophenyls having from 1 to 20 carbon atoms.

**13.** A functionalized polymer, as set forth in claim 12 wherein the two $R_6$ groups together form a cyclic group.

**14.** A vulcanizable elastomeric compound having reduced hysteresis properties comprising:

an elastomeric polymer having chains carrying the functional group A wherein A is derived from a polymerization initiator having the general formula

$$(A)Li(SOL)_y$$

where y is of from 1 to 3; SOL is a solubilizing component selected from the group consisting of hydrocarbons, ethers, amines or mixtures thereof; and, A is selected from cyclic amines having the general formula

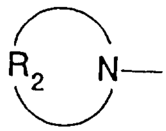

where $R_2$ is selected from the group consisting of an alkylene, oxy- or amino-alkylene group having from 3 to 16 methylene groups with the proviso that an alkylene, oxy- or amino-alkylene group having from 3 to 7 methylene groups is excluded; and
from 5 to 80 parts by weight of carbon black, per 100 parts of said polymer.

**15.** A tire having decreased rolling resistance resulting from a treadstock containing a vulcanizable elastomeric compound as set forth in claim 14.

**16.** A vulcanizable rubber composition comprising:

a polymer carrying at least one amine functional group A, wherein A is derived from the reaction product of an organolithium compound and an amine; and a tin-carbon bond, and wherein A is selected from cyclic amines having the general formula

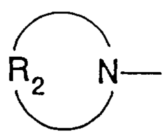

where $R_2$ is selected from the group consisting of an alkylene, oxy- or amino-alkylene group having from 3 to 16 methylene groups, with the proviso that an alkylene, oxy- or amino-alkylene group having from 3 to 7 methylene groups is excluded.

**17.** A tire formed from the vulcanizable rubber composition of claim 16 and from 5 to 80 parts by weight of carbon black, per 100 parts of said polymer.

**18.** A tire, as set forth in claim 17,wherein A is selected from cyclic amines having the general formula

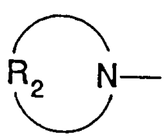

where $R_2$ is selected from the group consisting of an alkylene, oxy- or amino-alkylene group having from 3 to 16 methylene groups, with the proviso that an alkylene, oxy- or amino-alkylene group having from 3 to 7 methylene groups is excluded.

**19.** A rubber composition comprising:

a polymer carrying at least one amine functional group A, wherein A is derived from the reaction product of an organolithium compound and an amine; and

a second functional group selected and derived from the group consisting of terminating agents, coupling agents and linking agents. and wherein A is selected from cyclic amines having the general formula

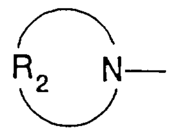

where $R_2$ is selected from the group consisting of an alkylene, oxy- or amino-alkylene group having from 3 to 16 methylene groups, with the proviso that an alkylene, oxy- or amino-alkylene group having from 3 to 7 methylene groups is excluded.

**20.** A rubber composition as set forth in claim 19, wherein said terminating agent, coupling and linking agents are selected from the group consisting of carbon dioxide; N,N,N',N'-tetraalkyldiaminobenzophenones; N,N-dialkylaminobenzaldehydes; 1,3-dialkyl-2-imidazolidinones; 1-alkyl substituted pyrrolidinones; 1-aryl substituted pyrrolidinones; dialkyl- and dicycloalkyl-carbodiimides having from 5 to 20 carbon atoms; $(R_3)_aZX_b$;

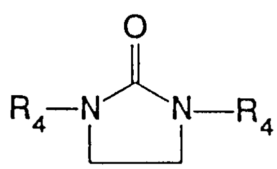

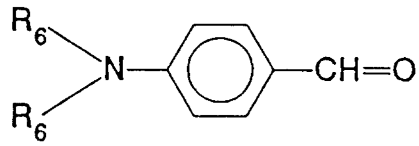

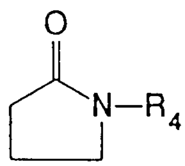

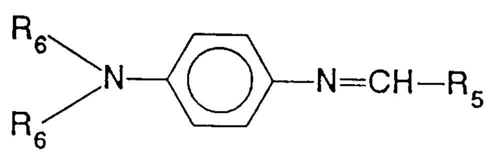

and,

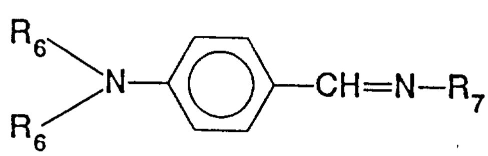

where Z is tin or silicon; $R_3$ is selected from the group consisting of alkyls having from 1 to 20 carbon atoms, cycloalkyls having from 3 to 20 carbon atoms, aryls having from 6 to 20 carbon atoms and aralkyls having from 7 to 20 carbon atoms; X is chlorine or bromine; a is from 0 to 3 and b is from 1 to 4 where a + b = 4; each $R_4$ is the same or different and is selected from the group consisting of alkyls, cycloalkyls and aryls, having from 1 to 12 carbon atoms; $R_5$ is selected from the group consisting of t-alkyls, phenyls, alkylphenyls and N,N-dialkylaminophenyls, having from 4 to 20 carbon atoms; each $R_6$ is the same or different, and is selected from the group consisting of alkyls and cycloalkyls having from 1 to 12 carbon atoms; and, $R_7$ is selected from the group consisting of alkyls, phenyls, alkylphenyls and N,N-dialkylaminophenyls having from 1 to 20 carbon atoms.

**21.** A tire formed from the rubber composition of claim 19 and from 5 to 80 parts by weight of carbon black, per 100 parts of said polymer.

## Patentansprüche

1. In acyclischen Alkanlösungsmitteln löslicher, anionischer Polymerisationsinitiator, umfassend: ein solubilisiertes Lithioamin mit der allgemeinen Formel

$$(A)Li(SOL)_y$$

worin y einen Wert von 1 bis 3 hat, SOL für eine Solubilisierungskomponente, ausgewählt aus der Gruppe, bestehend aus Kohlenwasserstoffen, Ethern, Aminen oder Gemischen davon, steht; und A aus cyclischen Aminen mit der allgemeinen Formel

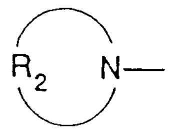

ausgewählt ist, worin $R_2$ aus der Gruppe, bestehend aus einer Alkylen-, Oxy- oder Aminoalkylengruppe mit 3 bis 16 Methylengruppen, ausgewählt ist, mit der Maßgabe, daß eine Alkylen-, Oxy- oder Aminoalkylengruppe mit 3 bis 7 Methylengruppen ausgeschlossen ist.

2. Anionischer Polymerisationsinitiator nach Anspruch 1, dadurch **gekennzeichnet,** daß SOL aus der Gruppe, bestehend aus Dienyl- oder vinylaromatischen Polymeren oder Copolymeren mit 3 bis 300 Polymerisationseinheiten ausgewählt ist.

3. Anionischer Polymerisationsinitiator nach Anspruch 2, dadurch **gekennzeichnet,** daß SOL aus der Gruppe, bestehend aus Polybutadien, Polystyrol, Polyisopren und Copolymeren davon, ausgewählt ist.

4. Anionischer Polymerisationsinitiator nach Anspruch 1, dadurch **gekennzeichnet**, daß SOL aus der Gruppe, bestehend aus Tetrahydrofuran und Tetramethylethylendiamin, ausgewählt ist.

5. Anionischer Polymerisationsinitiator nach Anspruch 1, dadurch **gekennzeichnet,** daß A aus der Gruppe, bestehend aus Azacyclotridecan und Azacycloheptadecan, ausgewählt ist.

6. Anionischer Polymerisationsinitiator nach Anspruch 1, dadurch **gekennzeichnet,** daß er durch eine Stufe der Umsetzung einer Organolithiumverbindung mit einem Funktionalisierungsmittel in Gegenwart des genannten Solubilisierungsmittels hergestellt worden ist; wobei das Funktionalisierungsmittel aus der Gruppe, bestehend aus Alkyl-, Dialkyl- und Cycloalkyl-Aminresten ausgewählt worden ist.

7. Anionischer Polymerisationsinitiator nach Anspruch 6, dadurch **gekennzeichnet,** daß die Organolithiumverbindung die allgemeine Formel RLi hat, worin R aus der Gruppe, bestehend aus Alkyl, Cycloalkyl, Alkenyl, Alkinyl, Aryl und Aralkyl mit 1 bis 20 Kohlenstoffatomen und kurzkettigen Polymeren mit niedrigen Molekulargewichten aus Diolefin- und Vinylarylmonomeren mit bis zu 25 Einheiten ausgewählt ist.

8. Anionischer Polymerisationsinitiator nach Anspruch 1, dadurch **gekennzeichnet,** daß er durch die Stufen der Umsetzung einer Organolithiumverbindung mit einem Funktionalisierungsmittel zur Bildung eines Reaktionsprodukts, wobei das Funktionalisierungsmittel aus der Gruppe, bestehend aus Alkyl-, Dialkyl- und Cycloalkyl-aminresten, ausgewählt worden ist und der Umsetzung des genannten Reaktionsprodukts mit dem Solubilisierungsmittel hergestellt worden ist.

9. Funktionalisiertes Polymeres, umfassend:

   eine Polymerkette, die mindestens eine funktionelle Gruppe A trägt, wobei sich A von einem Polymerisationsinitiator mit der allgemeinen Formel

$$(A)Li(SOL)_y$$

ableitet, worin y einen Wert von 1 bis 3 hat; SOL für eine Solubilisierungskomponente, ausgewählt aus der Gruppe, bestehend aus Kohlenwasserstoffen, Ethern, Aminen oder Gemischen davon, steht; und A aus cyclischen Aminen mit der allgemeinen Formel

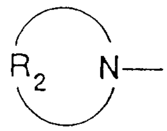

ausgewählt ist, worin $R_2$ aus der Gruppe, bestehend aus einer Alkylen-, Oxy- oder Aminoalkylengruppe mit 3 bis 16 Methylengruppen, ausgewählt ist, mit der Maßgabe, daß eine Alkylen-, Oxy- oder Aminoalkylengruppe mit 3-7 Methylengruppen ausgeschlossen ist.

**10.** Funktionalisiertes Polymeres nach Anspruch 9, dadurch **gekennzeichnet,** daß es durch die Stufen der Bildung einer Lösung von einem oder mehreren anionisch polymerisierbaren Monomeren in einem Alkanlösungsmittel und Polymerisation der genannten Monomeren in Gegenwart des Polymerisationsinitiators hergestellt worden ist.

**11.** Funktionalisiertes Polymeres nach Anspruch 10, dadurch **gekennzeichnet,** daß die Herstellung die weitere Stufe der Umsetzung des genannten Polymeren mit einer funktionellen Gruppe, ausgewählt und abgeleitet aus bzw. von der Gruppe, bestehend aus Terminisierungsmitteln, Kupplungsmitteln und Verknüpfungsmitteln derart, daß das resultierende Polymere multifunktionell ist, umfaßt.

**12.** Funktionalisiertes Polymeres nach Anspruch 11, dadurch **gekennzeichnet,** daß das Terminisierungsmittel, das Kupplungs- und das Verknüpfungsmittel aus der Gruppe, bestehend aus Kohlendioxid; N,N,N',N'-tetraalkyldiaminobenzophenonen; N,N-dialkylaminobenzaldehyden; 1,3-Dialkylimidazolidinonen; 1-Alkyl-substituierten Pyrrolidinonen; 1-Aryl-substituierten Pyrrolidinonen; Dialkyl- und Dicycloalkylcarbodiimiden mit 5 bis 20 Kohlenstoffatomen; $(R_3)_aZX_b$;

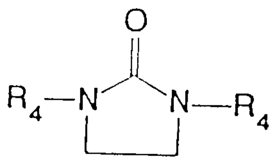

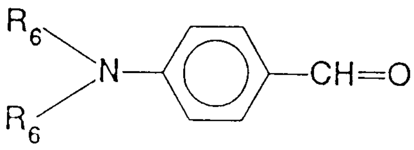

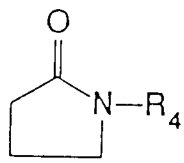

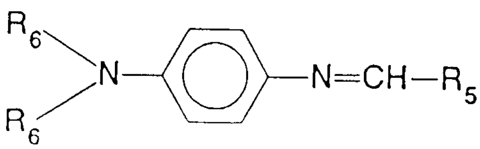

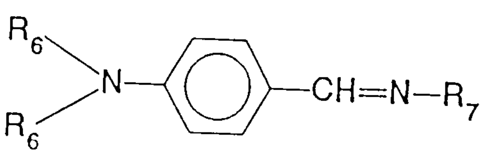

ausgewählt worden sind, wobei Z für Zinn oder Silicium steht, $R_3$ aus der Gruppe, bestehend aus Alkyl mit 1 bis 20 Kohlenstoffatomen, Cycloalkyl mit 3 bis 20 Kohlenstoffatomen, Aryl mit 6 bis 20 Kohlenstoffatomen und Aralkyl mit 7 bis 20 Kohlenstoffatomen ausgewählt ist; X für Chlor oder Brom steht; a einen Wert von 0 bis 3 und b einen Wert von 1 bis 4 hat, wobei a + b = 4; wobei jede Gruppe $R_4$ die gleiche oder eine verschiedene ist und aus der Gruppe, bestehend aus Alkyl, Cycloalkyl und Aryl mit 1 bis 12 Kohlenstoffatomen, ausgewählt ist; $R_5$ aus der Gruppe, bestehend aus t-Alkyl, Phenyl, Alkylphenyl und N,N-dialkylaminophenyl mit 4 bis 20 Kohlenstoffatomen ausgewählt ist; jede Gruppe $R_6$ gleich oder verschieden ist und aus der Gruppe, bestehend aus Alkyl und Cycloalkyl mit 1 bis 12 Kohlenstoffatomen, ausgewählt ist und $R_7$ aus der Gruppe, bestehend aus Alkyl, Phenyl, Alkylphenyl und N,N-dialkylaminophenyl mit 1 bis 20 Kohlenstoffatomen, ausgewählt ist.

**13.** Funktionalisiertes Polymeres nach Anspruch 12, dadurch **gekennzeichnet,** daß zwei Gruppen $R_6$ miteinander eine cyclische Gruppe bilden.

**14.** Vulkanisierbare elastomere Masse mit verminderten Hysterese-Eigenschaften, umfassend:

ein elastomeres Polymeres, das Ketten hat, welche die funktionelle Gruppe A tragen, wobei sich A von einem Polymerisationsinitiator mit der allgemeinen Formel

$$(A)Li(SOL)_y$$

ableitet, worin y einen Wert von 1 bis 3 hat, SOL für eine Solubilisierungskomponente, ausgewählt aus der Gruppe, bestehend aus Kohlenwasserstoffen, Ethern, Aminen oder Gemischen davon, steht; und A aus cyclischen Aminen mit der allgemeinen Formel

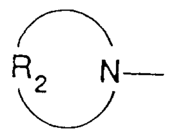

ausgewählt ist, worin $R_2$ aus der Gruppe, bestehend aus einer Alkylen-, Oxy- oder Aminoalkylengruppe mit 3 bis 16 Methylengruppen, ausgewählt ist, mit der Maßgabe, daß eine Alkylen-, Oxy- oder Aminoalkylengruppe mit 3 bis 7 Methylengruppen ausgeschlossen ist; und

5 bis 80 Gewichtsteile Ruß pro 100 Teile des genannten Polymeren.

**15.** Reifen mit vermindertem Rollwiderstand, resultierend von einer Laufflächenmasse, die eine vulkanisierbare elastomere Masse nach Anspruch 14 enthält.

**16.** Vulkanisierbare Kautschukmasse, umfassend ein Polymeres, das mindestens eine aminfunktionelle Gruppe A, wobei A sich von dem Reaktionsprodukt einer Organolithiumverbindung und eines Amins ableitet; und eine Zinnkohlenstoffbindung trägt und wobei A aus cyclischen Aminen mit der allgemeinen Formel

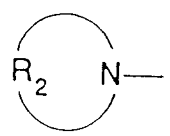

abgeleitet ist, worin $R_2$ aus der Gruppe, bestehend aus einer Alkylen-, Oxy- oder Aminoalkylengruppe mit 3 bis 16 Methylengruppen, ausgewählt ist, mit der Maßgabe, daß eine Alkylen-, Oxy- oder Aminoalkylengruppe mit 3 bis 7 Methylengruppen ausgeschlossen ist.

**17.** Reifen, gebildet aus einer vulkanisierbaren Kautschukmasse nach Anspruch 16 von 5 bis 80 Gewichtsteilen Ruß pro 100 Teile des genannten Polymeren.

**18.** Reifen nach Anspruch 17, dadurch **gekennzeichnet,** daß A aus cyclischen Aminen der allgemeinen Formel

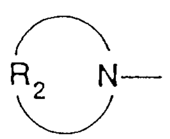

ausgewählt ist, worin $R_2$ aus der Gruppe, bestehend aus einer Alkylen-, Oxy- oder Aminoalkylgruppe mit 3 bis 16 Methylengruppen, ausgewählt ist, mit der Maßgabe, daß eine Alkylen-, Oxy- oder Aminoalkylengruppe mit 3 bis 7 Methylengruppen ausgeschlossen ist.

**19.** Kautschukmasse, umfassend:

ein Polymeres, das mindestens eine aminfunktionelle Gruppe A, wobei A sich von dem Reaktionsprodukt einer Organolithiumverbindung und einem Amin ableitet; und

eine zweite funktionelle Gruppe, ausgewählt und abgeleitet aus bzw. von einer Gruppe, bestehend aus Terminisierungsmitteln, Kupplungsmitteln und Verknüpfungsmitteln trägt, und wobei A aus cyclischen Aminen mit der allgemeinen Formel

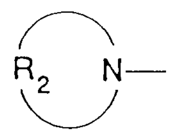

ausgewählt ist, worin $R_2$ aus der Gruppe, bestehend aus einer Alkylen-, Oxy- oder Aminoalkylengruppe mit 3 bis 16 Methylengruppen, ausgewählt ist, mit der Maßgabe, daß eine Alkylen-, Oxy- oder Aminoalkylengruppe mit 3 bis 7 Methylengruppen ausgeschlossen ist.

**20.** Kautschukmasse nach Anspruch 19, dadurch **gekennzeichnet,** daß das Terminisierungsmittel, das Kupplungs- und das Verknüpfungsmittel aus der Gruppe, bestehend aus Kohlendioxid; N,N,N',N'-tetraalkyldiaminobenzophenonen; N,N-dialkylaminobenzaldehyden; 1,3-Dialkyl-2-imidazolidinonen; 1-Alkyl-substituierten Pyrrolidinonen; 1-Aryl-substituierten Pyrrolidinonen; Dialkyl- und Dicycloalkylcarbodiimiden mit 5 bis 20 Kohlenstoffatomen; $(R_3)_aZX_b$;

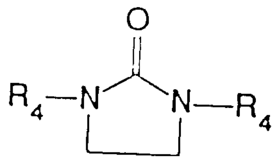

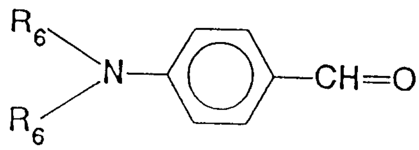

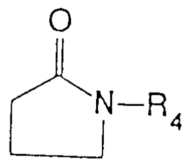

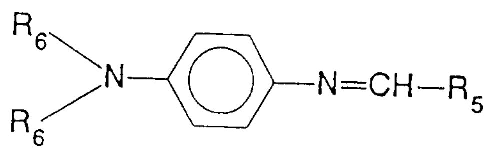

und

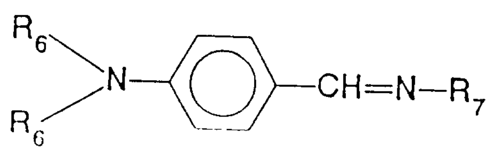

ausgewählt worden sind, wobei Z für Zinn oder Silicium steht, $R_3$ aus der Gruppe, bestehend aus Alkyl mit 1 bis 20 Kohlenstoffatomen, Cycloalkyl mit 3 bis 20 Kohlenstoffatomen, Aryl mit 6 bis 20 Kohlenstoffatomen und Aralkyl mit 7 bis 20 Kohlenstoffatomen ausgewählt ist; X für Chlor oder Brom steht; a einen Wert von 0 bis 3 und b einen Wert von 1 bis 4 hat, wobei a + b = 4; wobei jede Gruppe $R_4$ die gleiche oder eine verschiedene ist und aus der Gruppe, bestehend aus Alkyl, Cycloalkyl und Aryl mit 1 bis 12 Kohlenstoffatomen, ausgewählt ist; $R_5$ aus der Gruppe, bestehend aus t-Alkyl, Phenyl, Alkylphenyl und N,N-dialkylaminophenyl mit 4 bis 20 Kohlenstoftatomen ausgewählt ist; jede Gruppe $R_6$ gleich oder verschieden ist und aus der Gruppe, bestehend aus Alkyl und Cycloalkyl mit 1 bis 12 Kohlenstoffatomen, ausgewählt ist und $R_7$ aus der Gruppe, bestehend aus Alkyl, Phenyl, Alkylphenyl und N,N-dialkylaminophenyl mit 1 bis 20 Kohlenstoffatomen, ausgewählt ist.

**21.** Reifen, gebildet aus der Kautschukmasse nach Anspruch 19 und 5 bis 80 Gewichtsteilen Ruß pro 100 Teile des genannten Polymeren.

## Revendications

1. Initiateur de polymérisation anionique, soluble dans les solvants consistant en alcanes acycliques, comprenant :

    une lithio-amine solubilisée, répondant à la formule générale

    $$(A)Li(SOL)_y$$

    dans laquelle y a une valeur de 1 à 3 ; SOL représente un constituant solubilisant choisi dans le groupe consistant en hydrocarbures, éthers, amines et leurs mélanges ; et A est choisi parmi des amines cycliques répondant à la formule générale

    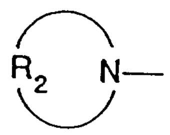

    dans laquelle $R_2$ est choisi dans le groupe consistant en groupes alkylène, oxy- ou amino-alkylène ayant 3 à 16 groupes méthylène, sous réserve qu'un groupe alkylène, oxy- ou amino-alkylène ayant 3 à 7 groupes méthylène soit exclu.

2. Initiateur de polymérisation anionique répondant à la définition suivant la revendication 1, dans lequel SOL est choisi dans le groupe consistant en polymères ou copolymères diényl- ou vinyl-aromatiques ayant 3 à 300 motifs de polymérisation.

3. Initiateur de polymérisation anionique répondant à la définition suivant la revendication 2, dans lequel SOL est choisi dans le groupe consistant en polybutadiène, polystyrène, polyisoprène et leurs copolymères.

4. Initiateur de polymérisation anionique répondant à la définition suivant la revendication 1, dans lequel SOL est choisi dans le groupe consistant en tétrahydrofuranne et tétraméthyléthylènediamine.

5. Initiateur de polymérisation anionique, répondant à la définition suivant la revendication 1, dans lequel A est choisi dans le groupe consistant en azacyclotridécane et azacycloheptadécane.

6. Initiateur de polymérisation anionique répondant à la définition suivant la revendication 1, préparé par l'étape consistant à faire réagir un composé organique de lithium avec un agent de fonctionnalisation en présence dudit agent solubilisant ; ledit agent de fonctionnalisation étant choisi dans le groupe consistant en les radicaux alkyl-, dialkyl- et cycloalkyl-amine.

7. Initiateur de polymérisation anionique répondant à la définition suivant la revendication 6, dans lequel le composé organique de lithium répond à la formule générale RLi dans laquelle R est choisi dans le groupe consistant en radicaux alkyle, cycloalkyle, alcényle, aryle et aralkyle ayant 1 à 20 atomes de carbone et des polymères de bas poids moléculaire à chaîne courte formés à partir d'une dioléfine et de monomères vinyl-aryliques ayant jusqu'à 25 motifs.

8. Initiateur de polymérisation anionique répondant à la définition suivant la revendication 1, préparé par les étapes consistant à faire réagir un composé organique de lithium avec un agent de fonctionnalisation pour former un produit de réaction ; ledit agent de fonctionnalisation étant choisi dans le groupe consistant en les radicaux alkyl-, dialkyl- et cycloalkyl-amine, et à faire réagir ledit produit de réaction avec l'agent solubilisant.

9. Polymère fonctionnalisé, comprenant :

    une chaîne polymérique portant au moins un groupe fonctionnel A, ledit groupe fonctionnel A étant dérivé d'un initiateur de polymérisation répondant à la formule générale

    $$(A)Li(SOL)_y$$

dans laquelle y a une valeur de 1 à 3 ; SOL représente un constituant solubilisant choisi dans le groupe consistant en hydrocarbures, éthers, amines et leurs mélanges ; et A est choisi parmi des amines cycliques répondant à la formule générale

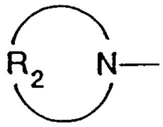

dans laquelle $R_2$ est choisi dans le groupe consistant en groupes alkylène, oxy- ou amino-alkylène ayant 3 à 16 groupes méthylène, sous réserve qu'un groupe alkylène, oxy- ou amino-alkylène ayant 3 à 7 groupes méthylène soit exclu.

**10.** Polymère fonctionnalisé répondant à la définition suivant la revendication 9, préparé par les étapes consistant à former une solution d'un ou plusieurs monomères aptes à la polymérisation anionique dans un solvant consistant en un alcane, et à polymériser lesdits monomères en présence de l'initiateur de polymérisation.

**11.** Polymère fonctionnalisé répondant à la définition suivant la revendication 10, préparé avec l'étape supplémentaire consistant à faire réagir ledit polymère avec un groupe fonctionnel choisi dans le, et dérivé du, groupe consistant en agents de terminaison, agents de couplage et agents de liaison, de telle sorte que le polymère résultant soit multifonctionnel.

**12.** Polymère fonctionnalisé répondant à la définition suivant la revendication 11, dans lequel les agents de terminaison, les agents de couplage et les agents de liaison sont choisis dans le groupe consistant en dioxyde de carbone ; N,N,N',N'-tétraalkyldiaminobenzophénones ; N,N-dialkylaminobenzaldéhydes ; 1,3-dialkylimidazolidinones ; pyrrolidinones à substituants 1-alkyle ; pyrrolidinones à substituants 1-aryle ; dialkyl- et dicycloalkyl-carbodiimides ayant 5 à 20 atomes de carbone ; $(R_3)_aZX_b$ ;

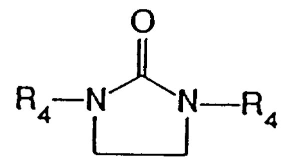

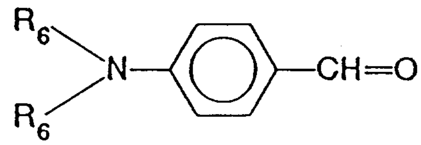

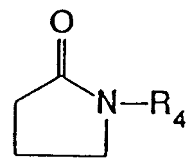

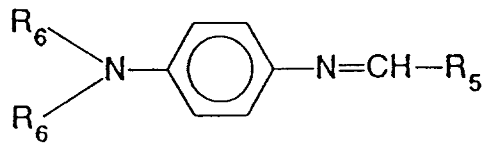

et

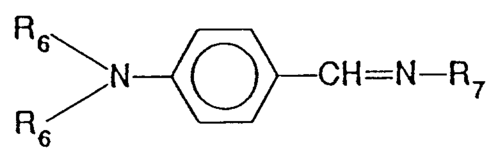

formules dans lesquelles Z représente l'étain ou le silicium ; $R_3$ est choisi dans le groupe consistant en radicaux alkyle ayant 1 à 20 atomes de carbone, radicaux cycloalkyle ayant 3 à 20 atomes de carbone, radicaux aryle ayant 6 à 20 atomes de carbone et radicaux aralkyle ayant 7 à 20 atomes de carbone ; X représente le chlore ou le brome ; a a une valeur de 0 à 3 et b a une valeur de 1 à 4, la somme a + b étant égale à 4 ; les radicaux $R_4$ sont identiques ou différents et sont choisis chacun dans le groupe consistant en radicaux alkyle, cycloalkyle et aryle, ayant 1 à 12 atomes de carbone ; $R_5$ est choisi dans le groupe consistant en radicaux tertio-alkyle, phényle, alkylphényle et N,N-dialkylaminophényle, ayant 4 à 20 atomes de carbone ; les radicaux $R_6$ sont identiques ou différents et sont choisis chacun dans le groupe consistant en radicaux alkyle et cycloalkyle ayant 1 à 12 atomes de carbone ; et $R_7$ est choisi dans le groupe consistant en radicaux alkyle, phényle, alkylphényle et N,N-dialkylaminophényle ayant 1 à 20 atomes de carbone.

**13.** Polymère fonctionnalisé répondant à la définition suivant la revendication 12, dans lequel les deux groupes $R_6$, conjointement, forment un groupe cyclique.

**14.** Composé élastomère vulcanisable ayant des propriétés d'hystérésis réduite, comprenant :

un polymère élastomère ayant des chaînes portant le groupe fonctionnel A, ledit groupe fonctionnel A étant dérivé d'un initiateur de polymérisation répondant à la formule générale

$$(A)Li(SOL)_y$$

dans laquelle y a une valeur de 1 à 3, SOL représente un constituant solubilisant choisi dans le groupe consistant en hydrocarbures, éthers, amines et leurs mélanges ; et A est choisi parmi des amines cycliques répondant à la formule générale

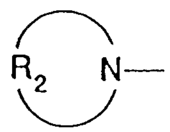

dans laquelle $R_2$ est choisi dans le groupe consistant en groupes alkylène, oxy- ou amino-alkylène ayant 3 à 16 groupes méthylène, sous réserve qu'un groupe alkylène, oxy- ou amino-alkylène ayant 3 à 7 groupes méthylène soit exclu ; et

5 à 80 parties en poids de noir de carbone, pour 100 parties dudit polymère.

**15.** Bandage pneumatique présentant une résistance réduite au roulement, obtenu à partir d'un caoutchouc pour bande de roulement contenant un composé élastomère vulcanisable répondant à la définition suivant la revendication 14.

**16.** Composition de caoutchouc vulcanisable, comprenant :

un polymère portant au moins un groupe fonctionnel amine A, ledit groupe fonctionnel amine A étant dérivé du produit de réaction d'un composé organique de lithium et d'une amine; et une liaison étain-carbone, ledit groupe A étant choisi parmi des amines cycliques répondant à la formule générale

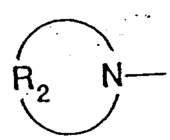

dans laquelle $R_2$ est choisi dans le groupe consistant en groupes alkylène, oxy- ou amino-alkylène ayant 3 à 16 groupes méthylène, sous réserve qu'un groupe alkylène, oxy- ou amino-alkylène ayant 3 à 7 groupes méthylène soit exclu.

**17.** Bandage pneumatique formé à partir de la composition de caoutchouc vulcanisable suivant la revendication 16 et à partir d'une quantité de 5 à 80 parties en poids de noir de carbone, pour 100 parties dudit polymère.

**18.** Bandage pneumatique répondant à la définition suivant la revendication 17, dans lequel A est choisi parmi des amines cycliques répondant à la formule générale

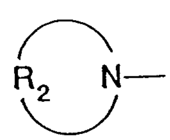

$R_2$ est choisi dans le groupe consistant en groupes alkylène, oxy- ou amino-alkylène ayant 3 à 16 groupes méthylène, sous réserve qu'un groupe alkylène, oxy- ou amino-alkylène ayant 3 à 7 groupes méthylène soit exclu.

**19.** Composition de caoutchouc comprenant:

un polymère portant au moins un groupe fonctionnel amine A, ledit groupe fonctionnel amine A étant dérivé du produit de réaction d'un composé organique de lithium et d'une amine ; et
un second groupe fonctionnel choisi dans, et dérivé du, groupe consistant en agents de terminaison, agents de couplage et agents de liaison, ledit groupe A étant choisi parmi des amines cycliques répondant à la formule générale

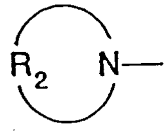

dans laquelle $R_2$ est choisi dans le groupe consistant en groupes alkylène, oxy- ou amino-alkylène ayant 3 à 16 groupes méthylène, sous reserve qu'un groupe alkylène, oxy- ou amino-alkylène ayant 3 à 7 groupes méthylène soit exclu.

**20.** Composition de caoutchouc répondant à la définition suivant la revendication 19, dans laquelle les agents de terminaison, les agents de couplage et les agents de liaison sont choisis dans le groupe consistant en dioxyde de carbone ; N,N,N',N'-tétraalkyldiaminobenzophénones ; N,N-dialkylaminobenzaldéhydes ; 1,3-dialkyl-2-imidazolidinones ; pyrrolidinones à substituants 1-alkyle ; pyrrolidinones à substituants 1-aryle ; dialkyl- et dicycloalkyl-carbodiimides ayant 5 à 20 atomes de carbone ; $(R_3)_aZX_b$ ;

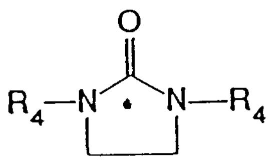

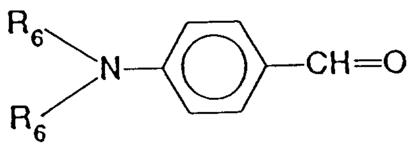

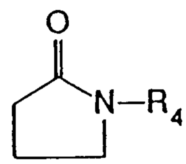

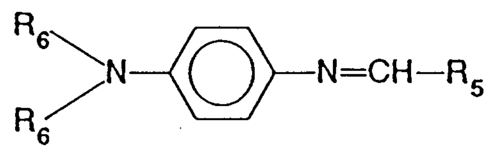

et

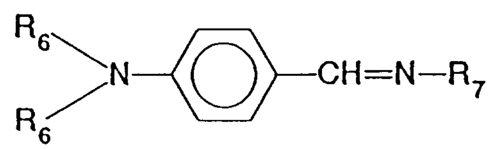

formules dans lesquelles Z représente l'étain ou le silicium ; $R_3$ est choisi dans le groupe consistant en radicaux alkyle ayant 1 à 20 atomes de carbone, radicaux cycloalkyle ayant 3 à 20 atomes de carbone, radicaux aryle ayant 6 à 20 atomes de carbone et radicaux aralkyle ayant 7 à 20 atomes de carbone ; X représente le chlore ou le brome ; a a une valeur de 0 à 3 et b a une valeur de 1 à 4, la somme a + b étant égale à 4 ; les radicaux $R_4$ sont identiques ou différents et sont choisis chacun dans le groupe consistant en radicaux alkyle, cycloalkyle et aryle, ayant 1 à 12 atomes de carbone ; $R_5$ est choisi dans le groupe consistant en radicaux tertioalkyle, phényle, alkylphényle et N,N-dialkylaminophényle, ayant 4 à 20 atomes de carbone ; les radicaux $R_6$ sont identiques ou différents et sont choisis chacun dans le groupe consistant en radicaux alkyle et cycloalkyle ayant 1 à 12 atomes de carbone ; et $R_7$ est choisi dans le groupe consistant en radicaux alkyle, phényle, alkylphényle et N,N-dialkylaminophényle ayant 1 à 20 atomes de carbone.

**21.** Bandage pneumatique formé à partir de la composition de caoutchouc suivant la revendication 19 et à partir d'une quantité de 5 à 80 parties en poids de noir de carbone, pour 100 parties dudit polymère.